# EUROPEAN PATENT APPLICATION

(11) **EP 4 804 104 A1**
(43) Date of publication of application: **09.09.2026**
(21) Application number: 26159733.0
(22) Date of filing: 20.02.2026
(51) Int. Cl.: G06Q 30/0201, G06Q 30/0202, G06Q 30/0207, G06Q 30/0204

(54) **METHOD AND SYSTEM FOR OPTIMIZING RETAIL PROMOTIONS WITH MIXED-INTEGER NON-LINEAR PROGRAMMING AND CROSS-ELASTICITY EFFECTS**

(30) Priority: 06.03.2025 IN 202521020304
(71) Applicant: Tata Consultancy Services Limited, Mumbai, Maharashtra 400 021 (IN)
(72) Inventor: GOVINDARAJU, Uma Maheswari, Chennai, Tamil Nadu (IN); SETHURAMAN, Srividhya, 600113 Chennai, Tamil Nadu (IN); RAMANAN, Sharadha, Chennai, Tamil Nadu (IN)
(74) Representative: Goddar, Heinz J.

(57) **Abstract**

Existing solutions often rely on linearization or heuristic methods, which fail to capture the nonlinear interdependencies inherent in promotion planning. A method and system for optimizing retail promotions with Mixed-Integer Non-Linear Programming (MINLP) and cross-elasticity effects is disclosed. The method uses two-step heuristics and Mixed-Integer Nonlinear Programming (MINLP) for promotion planning. The promotion optimization problem is to identify the optimal selection of promotional items and to obtain the optimal discounts for the set of the selected products or items and bundles, so that the weighted combination of total revenue and the total margin at a category level is maximized for the promotion period. Further, it achieves the given total revenue and total margin target numbers, while satisfying the constraints including minimum and maximum discounts, total budget, bundles conflicts and the business rules. Retailers require advanced demand forecasting tools that integrate historical sales data, price elasticity, budget constraints, and operational considerations.

## Description

### CROSS-REFERENCE TO RELATED APPLICATIONS AND PRIORITY

The present application claims priority to Indian application no. 202521020304, filed on March 6, 2025.

### TECHNICAL FIELD

The embodiments herein generally relate to the field of intelligent retail automation and, more particularly, to a method and system for optimizing retail promotions with Mixed-Integer Non-Linear Programming (MINLP) and cross-elasticity effects.

### BACKGROUND

Promotion planning is a critical component of retail strategy, involving structured price adjustments over specific periods to boost sales and achieve financial goals. It includes regular promotions, which follow an annual schedule, and event-based promotions, aligned with major occasions like Christmas or 'Back to School' campaigns. Conventional approaches of regular promotion require 4-6 months of advanced planning, based on forecasts by category managers, involving manual intervention. These forecasts shape the promotional calendar, determining the scope and frequency of planned activities. A well-structured promotion plan integrates revenue and margin targets, vendor contributions, and a predefined set of items and promotional strategies. Business rules define how promotions apply to specific products or bundles, ensuring alignment with retailer objectives while meeting operational constraints.

However, the complexity of promotion planning stems from cross-elasticity effects, where the pricing of one item influences demand for related products, and bundle dynamics, where discounts on grouped items or products affect overall category performance. Managing these inter-dependencies is essential to optimize promotional discounts while maintaining profitability.

Despite these complexities, existing solutions often rely on linearization or heuristic methods, which fail to capture the nonlinear interdependencies inherent in promotion planning. Further, models of existing optimization framework frequently neglect customer segmentation and personalized pricing. Mathematical solutions such as nonlinear mixed-integer programming have been explored to address non-linearity in retail promotion and pricing scenarios. However, focus is observed on static or less dynamic pricing models or addressing item or product pricing and not bundle pricing. It can be understood that bundle pricing needs to address more non-linear elements and complex interdependencies between the bundled items. Furthermore, for method that try to address bundled item pricing only handle existing bundles.

### SUMMARY

Embodiments of the present disclosure present technological improvements as solutions to one or more of the above-mentioned technical problems recognized by the inventors in conventional systems.

For example, in one embodiment, a method for optimizing retail promotions with Mixed-Integer Non-Linear Programming (MINLP) and cross-elasticity effects is provided.

The method includes creating a plurality of bundles within a plurality of items for promotion plan at a store group level based on inputs derived from affinity analysis for identifying co-purchased items, a complement addition for augmenting existing bundles, clustering items based on product attributes, and propensity scores for combining one or more items with high purchase likelihood within a plurality of customer segments. The items and bundles are created for each customer segment in a store or a store group.

Further, the method includes selecting a plurality of optimization candidates comprising a set of items from among the plurality of items and a set of bundles from among the plurality of bundles, and for a promotion optimization problem. A greedy selection technique and a local search heuristics is applied iteratively on the plurality of items and the plurality of bundles arranged in descending order of a greedy score metrics and filtered at an initial level based on business rules and bundle conflicts, a total budget of the promotion planning, and the propensity scores to obtain the plurality of optimization candidates.

Furthermore, the method includes identify a promotion list comprising optimal items and bundles and associated optimal discounts from among the plurality of optimization candidates using a Mixed Integer Non-Linear Programming (MINLP) that maximizes anon-linear objective function while satisfying a plurality of constraints. The plurality of constraints comprising a total margin loss constraint, preset minimum and maximum price discount bounds for the items and the bundles, the business rules, the bundle conflicts, cross-price elasticity within a demand function of the item during the MINLP optimization to capture effect of promotions on one item or bundle affecting a demand for other items or bundles. The MINLP maximizes the weighted combination of a total margin and a total revenue while allowing to exceed preset revenue and margin targets and applying constraints for a promotion period.

In another aspect, a system for optimizing retail promotions with Mixed-Integer Non-Linear Programming (MINLP) and cross-elasticity effects is provided. The system comprises a memory storing instructions; one or more Input/Output (I/O) interfaces; and one or more hardware processors coupled to the memory via the one or more I/O interfaces, wherein the one or more hardware processors are configured by the instructions to create a plurality of bundles within a plurality of items for promotion plan at a store group level based on inputs derived from affinity analysis for identifying co-purchased items, a complement addition for augmenting existing bundles, clustering items based on product attributes, and propensity scores for combining one or more items with high purchase likelihood within a plurality of customer segments. The items and bundles are created for each customer segment in a store or a store group.

Further, the one or more processors are configured to select a plurality of optimization candidates comprising a set of items from among the plurality of items and a set of bundles from among the plurality of bundles, and for a promotion optimization problem. A greedy selection technique and a local search heuristics is applied iteratively on the plurality of items and the plurality of bundles arranged in descending order of a greedy score metric and filtered at an initial level based on business rules and bundle conflicts, a total budget of the promotion planning, and the propensity scores to obtain the plurality of optimization candidates.

Furthermore, the one or more processors are configured to identify a promotion list comprising optimal items and bundles and associated optimal discounts from among the plurality of optimization candidates using a Mixed Integer Non-Linear Programming (MINLP) that maximizes anon-linear objective function while satisfying a plurality of constraints. The plurality of constraints comprising a total margin loss constraint, preset minimum and maximum price discount bounds for the items and the bundles, the business rules, the bundle conflicts, cross-price elasticity within a demand function of the item during the MINLP optimization to capture effect of promotions on one item or bundle affecting a demand for other items or bundles. The MINLP maximizes the weighted combination of a total margin and a total revenue while allowing to exceed preset revenue and margin targets and applying constraints for a promotion period.

In yet another aspect, there are provided one or more non-transitory machine-readable information storage mediums comprising one or more instructions, which when executed by one or more hardware processors causes a method for optimizing retail promotions with Mixed-Integer Non-Linear Programming (MINLP) and cross-elasticity effects.

The method includes creating a plurality of bundles within a plurality of items for promotion plan at a store group level based on inputs derived from affinity analysis for identifying co-purchased items, a complement addition for augmenting existing bundles, clustering items based on product attributes, and propensity scores for combining one or more items with high purchase likelihood within a plurality of customer segments. The items and bundles are created for each customer segment in a store or a store group.

Further, the method includes selecting a plurality of optimization candidates comprising a set of items from among the plurality of items and a set of bundles from among the plurality of bundles, and for a promotion optimization problem. A greedy selection technique and a local search heuristics is applied iteratively on the plurality of items and the plurality of bundles arranged in descending order of a greedy score metric and filtered at an initial level based on business rules and bundle conflicts, a total budget of the promotion planning, and the propensity scores to obtain the plurality of optimization candidates.

Furthermore, the method includes identifying a promotion list comprising optimal items and bundles and associated optimal discounts from among the plurality of optimization candidates using a Mixed Integer Non-Linear Programming (MINLP) that maximizes anon-linear objective function while satisfying a plurality of constraints. The plurality of constraints comprising a total margin loss constraint, preset minimum and maximum price discount bounds for the items and the bundles, the business rules, the bundle conflicts, cross-price elasticity within a demand function of the item during the MINLP optimization to capture effect of promotions on one item or bundle affecting a demand for other items or bundles. The MINLP maximizes the weighted combination of a total margin and a total revenue while allowing to exceed preset revenue and margin targets and applying constraints for a promotion period.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for optimizing retail promotions with Mixed-Integer Non-Linear Programming (MINLP) and cross-elasticity effects, in accordance with some embodiments of the present disclosure.
FIG. 1B illustrates an architectural overview of the system of FIG. 1A, in accordance with some embodiments of the present disclosure.
FIG. 2 is a flow diagram illustrating a method for optimizing retail promotions with the MINLP and the cross-elasticity effects, using the system depicted in FIG. 1A and 1B, in accordance with some embodiments of the present disclosure.
FIGS. 3A and 3B (collectively referred as FIG. 3) are experimental results depict system performance, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As can be understood, complexity of promotion planning stems from cross-elasticity effects, where the pricing of one item influences demand for related products, and bundle dynamics, where discounts on grouped items or products affect overall category performance. The category herein refers to the store hierarchy, wherein the store contains many category of products like groceries, clothing, etc. Category is a group of similar items based on customer usage and attributes. Managing these inter-dependencies is essential to optimize promotional discounts while maintaining profitability. Retailer domain must also consider factors such as hoarding behavior, cannibalization effects, and bundle conflicts, also referred to as bundle conflict rules, when designing promotion strategies. Cross elasticity analysis provides insights into how discounts on one item affect related products, while bundle modeling captures the aggregated impact of multi-item promotions.

Retailers often combine similar or distinct items, also referred to as products, into bundles to boost sales, targeting customer preferences identified through historical sales data. A bundle consists of a set of items and their number of units. Bundles could include multiple units of the same Stock Keeping Unit (SKU).

However, existing methods use existing bundles recorded in historical data. It is important to capture current retail scenarios to decide on bundling. It can be noted that using existing bundles recorded in historical data fail to capture the current sale dynamics experienced by items or bundles. Relying only on existing bundles might not capture current sales trend and lose customer interest and competitive edge thereby reducing revenue. Introducing new bundles gives opportunity for upselling with complementary or premium items, increasing revenue. Thus, creating new bundles based on current observations using affinity analysis (which includes data mining techniques such as market basket analysis) and other factors is desired. However, introduction of new bundles has technical challenges as it further complicates optimization, requiring sophisticated decision-making tools.

To address these challenges, embodiments of the present disclosure provide a method and system for optimizing retail promotions with Mixed-Integer Non-Linear Programming (MINLP) and cross-elasticity effects. The method uses two-step heuristics and Mixed-Integer Nonlinear Programming (MINLP) for promotion planning. The promotion optimization problem is to identify the optimal selection of promotional items and to obtain the optimal discounts for the set of selected products or items and bundles, so that the weighted combination of total revenue and the total margin at a category level **(hierarchy in a store)** is maximized for the promotion period. The category is a group of similar items based on customer usage and attributes. E.g. Grocery. Further, it achieves the given total revenue and total margin target numbers, while satisfying the constraints including minimum and maximum discounts, total budget, bundles conflicts and the business rules. retailers require advanced demand forecasting tools that integrate historical sales data, price elasticity, budget constraints, and operational considerations.

The method disclosed enables new bundle creation, which addresses data limitations, cold-start problems, and customer preferences. Data limitation is unavailability or incomplete availability of historical data due to changes in customer behavior, competition, other external factors like inflation. Due to this, cold-start problem occurs, where the promotion optimization has to be performed without prior knowledge of effectiveness of past promotions. Forming new bundles with demand information taken from similar bundles or constituent items helps address this issue.

New bundles are formed according to customer preference by combining items with high purchase likelihood within segments of customers. The bundles are created based identifying co-purchased items, augmenting existing bundles, grouping similar items, and combining items with high purchase likelihood within segments of customers.

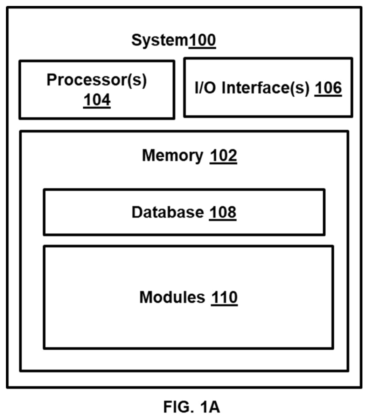

Referring now to the drawings, and more particularly to FIGS. 1A through 3B, where similar reference characters denote corresponding features consistently throughout the figures, there are shown preferred embodiments, and these embodiments are described in the context of the following exemplary system and/or method.

FIG. 1A is a functional block diagram of a system 100, for optimizing retail promotions with the MINLP and the cross-elasticity effects, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

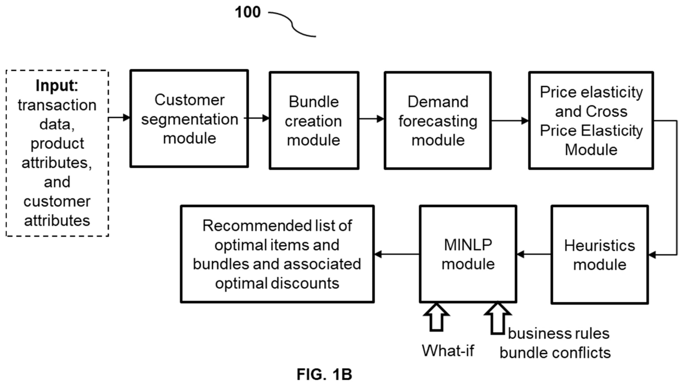

In an embodiment, the memory 102 includes a plurality of modules 110 such as Customer segmentation module, bundle creation module, Demand forecasting module, Price elasticity and Cross Price Elasticity module heuristics module, MINLP module as shown in FIG. 1B and the like.

The plurality of modules 110 include programs or coded instructions that supplement applications or functions performed by the system 100 for executing different steps involved in the process of optimizing retail promotions with the MINLP and the cross-elasticity effects, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.
a) Further, the memory 102 includes a database 108. The database (or repository) 108 may include a plurality of abstracted pieces of code for refinement and data that is processed, received, or generated as a result of the execution of the plurality of modules in the module(s) 110.
b) Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 1B through FIG. 3B.

FIG. 1B illustrates an architectural overview of the system 100 of FIG. 1A, in accordance with some embodiments of the present disclosure. The system disclosed utilizes a two-Stage Approach (Heuristics and MINLP).

Firstly, the bundle creation module enables new bundle creation, which addresses data limitations, cold-start problems, and customer preferences. The bundles are created based on:
(1) Affinity analysis, which includes data mining techniques such as market basket analysis: Refers to identifying co-purchased items using Point of Sales (POS) data.
(2) Complement Addition: Augmenting existing bundles.
(3) Clustering items based on product attributes: Grouping similar items.
(4) Propensity Scores: Combining items with high purchase likelihood within segments of customers. Thus, customer segments are created, wherein customers are segmented by the created by the customer segmentation module based on their purchasing behavior like recency, frequency, monetary spend and customer attributes like age, gender, etc. Bundles and products are selected for each customer segment - e.g.: Bargain Seekers are shown a separate set of products and bundles; health conscious customers are shown a different set of products and bundles and so on.

Unlike static rule-based promotion systems, the disclosed framework can be extended for real-time updates based on live transaction data from Point of Sale (PoS), competitor pricing trends, and store-group based customer responses to ongoing promotions.

The synthetic data generation for cold-start problems: The use of Generative Adversarial Networks (GANs, specifically Conditional GAN or CTGAN) to generate synthetic sales data for new items/bundles and for products/items with limited historical price variation addresses the cold-start problem in demand forecasting and price elasticity estimation.

Synthetic data generation for new bundles - to arrive at demand forecast and price elasticity values Steps:
i) Identify similar bundles from history corresponding to a new bundle.
ii) Train a GAN model based on data corresponding to similar bundles. The CTGAN is trained (on historical sales data, conditioned on product attributes and potentially store group segment information). The synthetic data is used to "bootstrap" demand forecasts and elasticity estimates for new items. Steps:
   a) Inputs to the CTGAN
   b) Training process
   c) Validation of synthetic data (KL Divergence, etc.)
   d) Integration of the synthetic data into the demand forecasting and elasticity estimation.
iii) For new bundles, for which similar bundles could not be found, the sales data of the constituent products/items is used to train the GAN model.
iv) The trained GAN model is then used to generate synthetic sales data for the given promotion period for the newly created bundle.

Once bundles are created, demand forecasting for new and existing bundles is computed by the demand forecasting module comprising an ensemble of models is used, which includes boosting algorithm based models such as XGBoost^{™}, Random Forest, Deep Learning models (DL) such as Long Term Short term Memory (LSTM) and compact pre-trained neural architecture models which are adapted from Large Language Modls (LLMs).

The combination of a preprocessing/heuristic stage (using scoring, business rules, greedy algorithm, and local search) followed by a rigorous MINLP optimization provides a balance between computational efficiency and solution quality. The two-stage approach to optimize planned promotions for stores or store groups consists of the use of Heuristics in the first step, which drastically reduces the search space for the MINLP solver by generating a computationally feasible initial solution, making it computationally feasible for large-scale retail datasets. Next, the MINLP optimization handles the inherent nonlinearities leading to more accurate and profitable promotion plans.

The core optimization is obtained from the MINLP formulation for store based promotion planning, which allows for the simultaneous optimization of product/bundle selection and discount levels, while explicitly modeling nonlinear relationships. This goes beyond simpler linear or integer programming approaches.

The MINLP module incorporates both cross-price elasticity (capturing inter-product dependencies, both positive and negative) and hoarding effects. This combination with a formal optimization framework allows for more targeted and effective promotions. Most prior work focuses on either one or treats them separately, not within a unified optimization.

The MINLP refines the solution to maximize revenue and margin while meeting all business constraints. This two-step approach ensures computational efficiency while solving a complex, nonlinear optimization problem.

The system 100 provides an approach to find substitutes and complements for items of interest. In one approach a causal time series analysis is used for determining substitutes for sales cannibalization quantification. The system 100 quantifies sales cannibalization by comparing time series recorded for observed and counterfactual sales during promotions.

Causal Time-Series Analysis: A directed network graph is obtained that identifies the links between potential cannibals and victims. It is just for filtering products that can be bundled together or to decide on bundle conflicts and does not involve MINLP.

A Bayesian Structural Time-Series (BSTS) modeling to isolate the true impact of promotions on overall category sales. Quantifies cannibalization effects between items and bundles, ensuring promotion strategies do not negatively impact other high-margin products. The BSTS modeling helps retailers identify victim and cannibal SKUs, allowing for strategic discount planning.

The system 100 also provides comprehensive "What-If" Analysis, over final recommended item and bundles for promotion. The method emphasizes the ability to perform extensive "what-if" scenario analysis (varying budget, discounts, cross-elasticity, hoarding effects) using the MINLP model and time-series forecasting. This provides actionable insights for retailers.

The system 100 uses a Tiny Time Mixers (TTM), an AI-based time-series model, to analyze what-if scenarios for different pricing and promotion configurations that are obtained from MINLP optimization.

The TTM evaluates: i) long-term effects of discounts on store group based customer purchase behavior. ii) impact of dynamic discounting strategies on key performance indicators (KPIs). iii)automates scenario generation, replacing manual rule-based experimentation.

Leveraging Timeseries Foundation Models: Using pre-trained open-source models for better time series handling.

Integration of Diverse Techniques: The system enables integration of diverse techniques (MINLP, heuristics, market basket analysis, GANs, LLMs, causal inference, time-series models) within a unified framework for a specific, practical problem (customer-segmented planned promotion optimization).

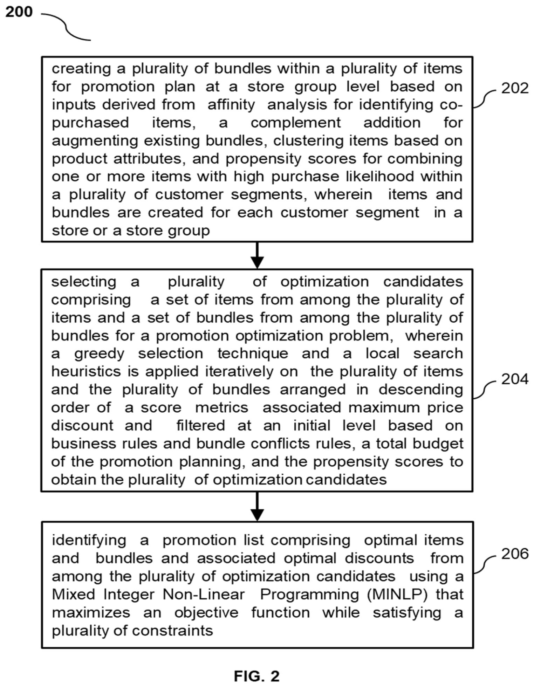

Table 1 below provides summary of notations used in mathematical model approach explained in method steps of FIG. 2 .

**Table 1**

| Notation | Description |
|---|---|
| *Pᵢ, d*_{*i*0}*, S*_{*i*0} | Regular price, base discount, base sales of product i |
| *dᵢ, Sᵢ* | Discount and demand at *dᵢ* of product i |
| *Cᵢ, eᵢᵢ, eᵢⱼ* | Cost price, price elasticity of product i, cross elasticity of product j on product i |
| *e_{ic}* | Cross price elasticity of product i with bundle c |
| *δᵢ, δ_{b}* | Indicator variable for selection of product i and bundle b for promotion |
| *Rᵢ, R_{b}* | Revenue of product i, Revenue of bundle b |
| *Mᵢ, M_{b}* | Margin of product i, Margin of bundle b |
| *rᵢ, mᵢ* | Auxiliary variable for revenue and margin of item i |
| *r_{b}, m_{b}* | Auxiliary variable for revenue and margin of bundle b |
| *w*₁,*w*₂ | Weights for the revenue and margin penalty resp. |
| *w*₃,*w*₄ | Weights for the revenue and margin penalty resp. |
| *R_{target}, M_{target}* | Revenue target and margin target numbers |
| *e_{bb}* | Price elasticity of bundle |
| *X_{kb}, Pₖ* | Units of k and Price of k in bundle b |
| *S_{b},d_{b}* | Bundle b's cumulative sales and discount |
| *d*_{*b*0}*, S*_{*b*0} | Initial discount and cum. Sales forecast for bundle b |
| N, L | No. of items in promotion, No. of bundles |
| Min discount, max discount | Minimum and maximum discount bounds |
| Budget | Margin loss due to promotion |
| MaxSKU | Maximum no. of SKUs to be promoted |
| ListSKUs, DelistSKUs | List, Delist certain SKUs |
| incompatSKUs | Tuples of incompatible SKUs |
| maxConsBundles | Maximum no. of bundles a constituent can belong to |
| M | Big M |

FIG. 2 is a flow diagram illustrating a method 200 for optimizing retail promotions with the MINLP and the cross-elasticity effects, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200, at step 202 of the method 200, the bundle creation module executed by the one or more hardware processors 104 is configured by the instructions to create a plurality of bundles within a plurality of items for promotion plan at a store group level. The bundle creation is based on inputs derived from affinity analysis for identifying co-purchased items, a complement addition for augmenting existing bundles, clustering items based on product attributes, and propensity scores for combining one or more items with high purchase likelihood within a plurality of customer segments, wherein items and bundles are created for each customer segment in a store or a store group. Thus, the method applies for a single store or group of stores looked upon as single store where the stores share similar demographic properties like location, customer characteristics, etc.

Thus, the bundle creation module takes into consideration the affinity analysis, or the market basket analysis, cross-price elasticity, and store group based customer propensity scores. This is a proactive bundle creation approach, rather than just optimizing discounts for existing bundles. The algorithm executed by the bundle creation module consists of: (1) Identify frequently co-purchased items (affinity analysis or market basket analysis). (2) Filter/prioritize based on cross-price elasticity computed by the price elasticity and cross price elasticity module (favor complementary items, avoid cannibalization) - giving preference to items with high negative cross-price elasticity. (3) Target bundles to specific store group segments based on customer propensity scores by including the propensity score while filtering items using heuristics. (4) Determine initial bundle discounts using machine learning methods like regression and clustering. The combination of these steps, and the specific rules/thresholds used, are key. This provides a data-driven, multi-faceted, and automated approach to bundle creation, integrated with the optimization.

The bundle creation module is explained below.
**Input:** Historical sales transactions data, store groups, customer segments, product attributes data.
   The customer segments are generated using AI-Driven Store Segmentation supported by Large Language Models LLMs utilizing LLM-based embeddings for store segmentation. A Transformer-based sentence embeddings is used to capture semantic relationships between store based customer attributes (demographics, purchase behavior, income, etc.). This enables improving clustering quality over traditional K-Means + One-Hot Encoding, leading to better-targeted promotions
**Details:** New bundle creation addresses data limitations, cold-start problems, and customer preferences.
**Propensity Score Calculation:** Item and bundle propensity scores for each customer segment are calculated as: 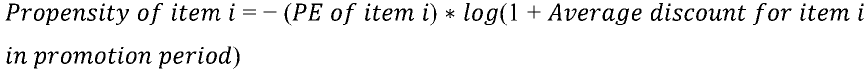 Propensity of item i = - (PE of item i) * log(1 + Average discount for item i in promotion period) Propensity score quantifies the purchase likelihood, considering price elasticity (PE) at the product/bundle-customer segment level and the promotion discount. Higher (less negative) propensity scores indicate a greater likelihood of purchasing with a discount. Higher (more negative) price elasticity increases propensity, reflecting greater price sensitivity. Larger discounts increase propensity, but with diminishing returns (logarithmic transformation). Less elastic products (PE near 0) exhibit lower propensity, indicating a weaker discount effect.
**Output:** Items and bundles created for each customer segment in the store or store group.

At step 204 of the method 200, the heuristics module executed by the one or more hardware processors 104 is configured by the instructions to select a plurality of optimization candidates comprising a set of items from among the plurality of items and a set of bundles from among the plurality of bundles for a promotion optimization problem. Existing bundles are bundles observed in history. Retailers would like to continue some previously successful bundles or bundles with supplier constraints. Thus, the existing bundles also can be considered for identifying optimization candidates. A greedy selection technique and a local search heuristics is applied iteratively on the plurality of items and the plurality of bundles arranged in descending order of a greedy score metric associated with maximum price discounts and filtered at an initial level based on business rules and the bundle conflicts rules, a total budget, and the propensity scores to obtain the plurality of optimization candidates. The greedy score metric is weighted sum of normalized performance score and propensity score

The greedy selection and local search enable to generate a computationally feasible initial solution and reduces search space of MNILP optimization.

**Business rules:** The business rules for promotion planning define:
a) a maximum number of SKUs to be promoted, incompatible SKUs, mandatory list/delist SKUs,
b) minimum and maximum price discount bounds for items,
c) minimum and maximum price discount bounds for bundles,
d) maximum number of bundles a SKU can belong to, and
e) a critical SKU list specifying SKUs that mandatorily require promotion planning.

**Bundle conflict rules:** The bundle conflicts comprise logical conflicts and user defined conflicts.
User defined conflicts: The user specified conflicts mentioned below are handled inside the MINLP optimization while selecting items/bundles for promotion.
   i) Conflicting Brands X, Y - to select brand X
   ii) Disable individual item promotion if item present in bundle
   iii) At least one bundle with a specific product/item must be promoted - to ensure this condition while selecting the final list of products and bundles
Logical conflicts: These conflicts are detected based on a pre-defined set of rules. Once the conflicts are identified, a conflict matrix is constructed.
   i) Bundles with same SKUs but different order
   ii) Conflicting Unit Offers for a Key Product Across Bundles with Different Complement Items

**Assumptions considered during MINLP optimization:**
i) The grocery category is considered.
ii) The Item level and pre-existing bundle promotions within a category.
iii) Inventory is assumed to be available throughout.
iv) Bundles are sold only in promotion.
v) The promo discount once obtained will be constant during the promo period.
vi) The behavior of customers in the historic period is representative of the behavior of customers during the promotion period.
vii) Promotion start and end dates are inputs and are fixed for a particular category.
viii) Total Budget and Total Target numbers are inputs and are fixed (at category level - hierarchy of a store or department) for the promotion period apriori.

### The heuristics module: Combines greedy heuristics with local heuristics

Input: Existing bundles identified from historical data and Items and bundles created by the bundle creation module for each customer segment in a store group, business rules, bundle conflicts, total budget, propensity scores

### Details:

### Greedy Heuristic:

Selecting the items and bundles for optimization, based on applying the maximum possible discount within the total budget constraint.
i) Receiving the list of all items and bundles.
ii) Sorting the items and bundles based on their greedy score metric $greedy _ {score}_{i} = α ⋅ {NormalizedY}_{i} + β ⋅ {PropensityScore}_{i}$
   where *α*,and *β* are weights representing the relative importance of *NormalizedYᵢ* and *PropensityScoreᵢ* (*α + β* = 1).
   Where *NormalizedYᵢ* is the normalized performance score(*Yᵢ*) for item or bundle i. Performance score(*Yᵢ*) is a weighted sum of revenue and margin associated with optimal performance ${Y}_{i} = λ ⋅ {R}_{i} \left({d}_{i}^{∗}\right) + \left(1-λ\right) ⋅ {M}_{i} \left({d}_{i}^{∗}\right)$
   Where λ is a weight that can be adjusted based on retailer preferences and historical data within 0 and 1,
   ${d}_{i}^{∗}$ is the discount that maximizes the weighted sum of revenue and margin.
iii) Selecting the items and bundles based on the Business rules and Bundle conflicts and delisting the irrelevant bundles and items.
   Items and bundles are deselected based on predefined business rules. This creates a set of "mandatory
   de-list" items (*S*), which are removed from the sorted list. ${\sum }_{i ∈ S} {δ}_{i} = 0$ where *δi* is a binary variable indicating whether item/bundle i is selected for promotion.
iv) Identifying the best items and bundles for optimization from the selected list with the highest score and applying the maximum permissible discount while respecting the total budget constraint.
Local Search Heuristic: The greedy solution is iteratively improved by running the algorithm for improvement of the solution or for a fixed number of iterations by adding/removing items and by adjusting discounts. The best solution found during local search serves as the initial solution (optimization candidates) for reducing the feasible search space, minimizing the number of branch-and-bound iterations required.

```
 Algorithm 1: Greedy Heuristic
 Pseudocode:
 Input: F: List of items/bundles sorted in decreasing order by score
    Total_Budget: Maximum allowed budget for discosunts
    Output: Sgreedy: Selected items/bundles with assigned discosunts
    Initialize Sgreedy ← Ø
    Remaining_Budget ←Total_Budget
    for each item/bundle i∈F do
 Margin _Loss[i] using (P[i], D*[i], S[i], X[kb])
  If Remaining_Budget-Margin_Loss[i] ≥ 0 then
    Add i = Sgreedy
       Discount[i] ← minD*[i], Closes_Discount_Fitting_Budget
       Remaining_Budget ← Remaining_Budget - Margin_Loss[i]
       Set selection indicator δ[i]or δ[b] ← 1
       Return Sgreedy with assigned discount.
```

```
 Algorithm 2: local search heuristics:
 Pseudocode
 Input: Sgreedy obtained by Algorithm 1
 Output: Sbest Best solution found
 Initialize Sbest = Sgreedy
    Best Objective S = Z(Sbest)
    Repeat: Generate neighbors NScurrent (by adding/removing items, adjusting
    discounts)
    For Sneighbor ∈ NScurrent do
 Calculate Z(Sneighbor)
    If Z(Sneighbor) > Best bjective and Sneighbor is easible then
           Update Scurrent to S neighbor
           Update Best Objective toZ( Sneighbor)
           Update Sbest to Sneighbor
           Until maximum iterations are reached, or no improvement in objective function
```

At step 206 of the method 200, the MINLP module executed by the one or more hardware processors 104 is configured by the instructions to identify a promotion list comprising optimal items and bundles and associated optimal discounts from among the plurality of optimization candidates using the MINLP optimization. The MNILP directly addresses non-linearity in a demand function by applying a plurality of constraints comprising a total margin loss constraint, preset minimum and maximum price discount bounds for the items and the bundles, the business rules, the bundle conflicts, cross-price elasticity and customer hoarding effects within the demand function of the MINLP to capture effect of promotions on one item or bundle affecting a demand for other items or bundles. The MINLP maximizes the weighted combination of a total margin and a total revenue while allowing to exceed preset revenue and margin targets and applying constraints for a promotion period.
1. The total margin loss for the category defining hierarchy of the store is less than or equal to total budget for the promotion planning. The category herein refers to the store or department hierarchy.
2. The total margin loss for the category is less than or equal to total budget for the category.
3. The total margin loss for the category is the total loss of the margin on the items and bundles sold in the category.
4. The total margin loss for the category is equal to summation of [(Regular Price - Promo price) * Demand at Promotional price] for items and bundles in the promotion list.

### MINLP module also referred as MINLP model:

**Input:** Selected items and bundles for optimization from the Heuristics ( plurality optimization candidates), minimum and maximum discounts, revenue target, margin target, total budget. A plurality of parameters computed for providing to the MINLP includes bundle and item level regular price elasticity (computed by the Price elasticity and Cross Price Elasticity Module), demand forecast (computed by the demand forecast module) at a specific price, substitutes, and complements for items and bundles, Cross elasticity values (computed by the Price elasticity and Cross Price Elasticity Module)for inter-related items, bundles, regular-promo item interaction and regular item - bundle interaction.

**Details:** Using mixed integer nonlinear optimization to further select the list items/bundles for promotion along with their optimal discounts that maximizes the objective and satisfies all the constraints including business rules and bundle conflicts that affects performance metrics.

Experiments were conducted on a server with an Intel^{™}(R) Core(TM) i5-10310U CPU @ 1.70GHz 2.21 GHz and 16GB of RAM, running Windows 11. The MINLP module was implemented in Python using the Gekko library and solved using the APOPT solver. The SLSQP baseline was implemented using the scipy.optimize.minimize function with the SLSQP method. Key parameter settings for the MINLP model were: *w*1 = 1, *w*2 = 1, *w*3 = 5000, *w*4 = 5000, *α* = 0.5, *β* = 0.5, and M = 1000000. These values were chosen based on discussions with the retailer and preliminary experiments. For the heuristic baseline, 1/3 was used as *α, β* and *γ* values for scoring. For MINLP, the following values were set: maximum_iterations 2000, max_iter_with_int_sol 10, minlp_as_nlp 0, nlp_maximum_iterations 100, minlp_branch_method 1(depth first), integer_tol 0.05, gap_tol 0.01; For SLSQP w the following values were set: maxiter 1000, ftol 1e-9 and for Heuristics the maxiter was set as 50.
**a) Identification of base promotion price** (*p*_{*i*0}) for items and bundles from historical sales data:
   In historical sales data, a given SKU or bundle could have had multiple promotion price discounts across different promotion periods. For arriving at the promotion price for the current season, the mode of promotion prices offered in the previous promotion periods is taken The quantity sold is adjusted based on the elasticity of the SKU corresponding to the mode of the previous promotion prices.
b) **Computing Demand Forecast** (*S*_{*i*0}) **for base promotion price** (*p*_{*i*0}) based on preprocessed sales data (The demand forecast is now based on the mode of previous promotion prices):
   Demand forecasting corresponding to the base price (*p*_{*i*0}), for the current season, is as described in following steps:
   i Perform preprocessing steps such as outlier removal, missing data, the preprocessed sales data from the previous step.
   ii Calculate weekly seasonality indices
   iii Use Random Forest feature importance for feature selection
   iv Standardize train and test data
   v Train linear regression, Random Forest, XGBoost, KNN, NN models using train data and compare error metrics.
   vi Use stacking of Random Forest, XGBoost, KNN model outputs to train meta model using ridge regression.
**c) Calculation of Price Elasticity (PE)** from historical sales data:
   The historical sales data is used to arrive at price elasticity estimates for the current promotion season. The price elasticity of SKUs is computed to arrive at the price elasticity of bundles.
   The price elasticity coefficients computation:
      i Use of the log-log regression model on historical sales with a flag indicator that denotes weeks in which promos were offered for the SKUs.
      ii Run the elastic-net regression at SKU level for the selected SKUs. In the first step, the regression is performed with all features except for the price columns against sales. Then residuals are obtained, the price columns are used to perform regression against the residuals.
      iii Filter PE values based on the p value (<0.05) and the R squared (>=0.45) value.
      iv If coefficients are still bad based on the statistical criteria, the data at SKU group level is aggregated and above step as repeated.
      v Once the price elasticity (PE) of SKUs is computed, each bundle and its constituents are investigated.
d) **Computation of Bundle elasticity (BE):** Bundle elasticity is defined as the weighted mean of the reciprocals of the elasticities of each of its constituents, with the weights being the price of the constituent. $\begin{matrix}\left(1/Bundle Elasticity\left(BE\right)\right) = \\ \frac{Sum \left(No: of units of each constituent SKU∗Price of each constituent SKU∗\left(\frac{1}{elasticity of each constituent SKU}\right)\right)}{Sum \left(No: of units of each constituent SKU∗Price of each constituent SKU\right)}\end{matrix}$
**e) Determination of related items:** From historical sales data, the products or items that are related to each other are identified in the form of substitutes or complements. This is used in the computation of **cross price elasticity.** The method 200 discloses two approaches for determination of related items. In an embodiment,
   **Approach 1 includes:**
      i Steps for approach 1 to identify related items are as follows:
      ii The covariance (and correlation) of the items is computed.
      iii The times of internal change for each item are located.
      iv The demand for the item at the point of internal change is normalized as follows:
         If the internal change is a price change, the demand is adjusted (using the elasticity) to the value it would have been if there was no price change
         If the internal change is a demand change (due to stock-outs or promotion), the demand is adjusted back to the mean demand before the change.
      v The correlation between the normalized demand of two items is calculated. If the correlation is high, the items are related. Otherwise, they are considered not related.
      vi Clusters of related items are formed.
   **In another embodiment,**
   **Approach 2 includes:**
      Running affinity analysis on the POS data and identify the set of items//Bundles cobought together with a threshold fixed on confidence and support scores. The products/Bundles that satisfy the thresholds are identified as related products.
   **Determination of cross price elasticity**
      i For item-item effect: The log of prices of related products identified in the previous step are included as additional features to the data and carry out the same steps as for calculation of Price Elasticity (PE) - for the computation of cross price elasticity coefficients.
      The coefficients corresponding to the log of prices of the related products/items satisfying the statistical filtration criteria are taken as the cross-price elasticity coefficients.
      i) For Bundle - Item selling in promotion price:
         a) The transaction data is prepared for the bundles wherein the bundle sales are fixed as the target variable. Periods in historical sales data are identified across promotions, wherein one or more of the bundle constituents are selling in their promotion price. The promotion prices of the bundle constituents are taken as features into a log-log regression model and then the same steps for calculation of Price Elasticity (PE) are carried out for the computation of cross price elasticity coefficients.
         b) The coefficients corresponding to the log of promotion prices of the constituent products satisfying the statistical filtration criteria are taken as the cross-price elasticity coefficients to represent the impact of items selling in their promotional prices impacting bundle sales.
         c) Similarly, the transaction data is prepared for the products selling at promotional prices wherein the sales of each of these products are fixed as the target variable in a separate data frame.
         d) The periods in historical sales data are identified across promotions wherein one or more bundles with the constituents like that of SKU in consideration are selling in their promotion price. The promotion prices of the bundles are taken as features into the log-log regression model and the same steps for calculation of Price Elasticity (PE) are carried out for the computation of cross price elasticity coefficients.
         e) The coefficients corresponding to the log of promotion prices of the bundles satisfying the statistical filtration criteria are taken as the cross-price elasticity coefficients to represent the impact of bundle prices impacting the sales of the SKU in consideration.
      ii) For bundle - Item selling in regular price:
         [1] The transaction data for the bundles is prepared, wherein the bundle sales column is fixed as the target variable. The periods in historical sales data across promotions are identified, wherein one or more of the bundle constituents are selling at their regular price. The log of regular prices of the bundle constituents are taken as features into the log-log regression model and carry out the same steps as detailed in 3 for the computation of cross price elasticity coefficients.
         [2] The coefficients corresponding to the log of regular prices of the constituent products satisfying the statistical filtration criteria are taken as the cross-price elasticity coefficients to represent the impact of items selling in their regular prices impacting bundle sales.
         [3] Similarly, the transaction data for the products selling at regular prices is prepared, wherein the sales of these products are fixed as the target variable in a separate data frame.
         [4] The periods in historical sales data across promotions are identified, wherein one or more bundles with the constituents like that of SKU in consideration are selling in their promotion price. The promotion prices of the bundles are taken as features into the log-log regression model and the same steps for calculation of Price Elasticity (PE) are carried out for the computation of cross price elasticity coefficients.
         [5] The coefficients corresponding to the log of regular prices of the bundles satisfying the statistical filtration criteria are taken as the cross-price elasticity coefficients to represent the impact of bundle prices impacting the sales of the SKU in consideration.

**Objective function** - **A nonlinear function:** For promotion planning optimization, a MINLP APOPT solver is adapted using Big-M method. APOPT solver handles both discrete and continuous variables, making it suitable for item selection and optimization of discounts. Big-M method works by introducing artificial variables with a large coefficient M to transform inequality constraints, creating an initial feasible solution. The objective of the promotion planning problem is to maximize the non-linear objective function which is a weighted combination of revenue and margin, while also penalizing deviations from the revenue and margin targets. The weights w1 and w2 determine the relative importance of revenue and margin, while w3 and w4 are large values that ensure the targets are met. The objective function, which is non-linear function is formulated such that the revenue and margin are allowed to exceed targets. 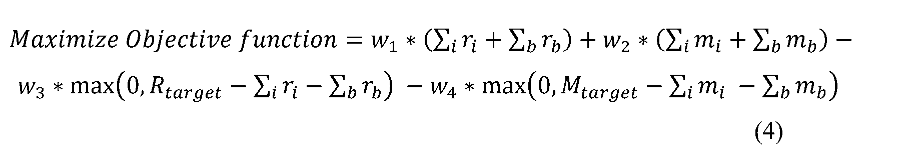 Maximize Objective function = w1 * (Σiri + Σbrb) + w2 * (Σimi + Σbmb)-w3 * max(0, (0Rtarget - Σiri - Σbrb) - w4 * max(0, Mtarget - Σimi - Σbmb) (4) Wherein,
- *w*₁,*w*₂: Weights for the revenue and margin resp.

- *w*₃,*w*₄: Weights for the revenue and margin penalty resp.
- *rᵢ*, *mᵢ*: Auxiliary variable for revenue and margin of item i
- *r_{b}, m_{b}*: Auxiliary variable for revenue and margin of bundle b
- *R_{target}, M_{target}*: Revenue target and margin target numbers

**Item** level: Revenue R, Margin M, and Demand S for item i, at discount *dᵢ*, are given below:
   Revenue for item i, ${R}_{i} = {\sum }_{i = 1}^{N} {P}_{i} \left(1-{δ}_{i}{d}_{i}\right) ∗ {S}_{i}$
   Margin for item i, ${M}_{i} = {\sum }_{i = 1}^{N} \left({P}_{i}\left(1-{δ}_{i}{d}_{i}\right)-{C}_{i}\right) ∗ {S}_{i}$
   Where,
      - *δᵢ, δ_{b}*: Indicator binary variable for selection of product/item i and bundle b for promotion
      ${P}_{i} = Regular price$ ${S}_{i} = Demand for item i$
   Demand for item i,
      a. Demand for item i at discount *dᵢ* running regression with item price, with primary effects, ${S}_{i} ′ = {S}_{i 0} ∗ {\left({P}_{i}\left(1-{δ}_{i}{d}_{i}/{p}_{i 0}\right)\right)}^{∧} e _ ii$
      b. Adjust demand for item i to include secondary effects for inter-item and bundle on promoted item, ${S}_{i} = {S}_{i}^{′} ∗ {{\prod }_{j \neq i} \left(\frac{{P}_{j} \left(1-{δ}_{j}{d}_{j}\right)}{{p}_{j 0}}\right)}^{- {e}_{ij}} ∗ {{\prod }_{b} \left(\frac{{\sum }_{k = 1}^{N} \left({X}_{k}∗{P}_{k}\right) \left(1-{d}_{b}\right)}{{\sum }_{k = 1}^{N} \left({X}_{k}∗{P}_{k}\right) \left(1-{d}_{b 0}\right)}\right)}^{{δ}_{b} ∗ {e}_{ib}}$
   Where,
      - *dᵢ, Sᵢ*: Discount and demand at *dᵢ* of product i
      - *X_{kb}, Pₖ*: Units of k and Price of k in bundle b
      - *p*_{*i*0}: The base promotion price of the item
      Including both effects, the demand equation for item is given by $\begin{matrix}{S}_{i} = {S}_{i 0} ∗ {\left({P}_{i}\left(1-{δ}_{i}{d}_{i}\right)/{p}_{i 0}\right)}^{∧} e _ ii ∗ {\prod }_{j \neq i} {\left({P}_{j}\left(1-{δ}_{j}{d}_{j}\right)/{p}_{j 0}\right)}^{∧} - e _ ij \\ ∗ {\prod }_{b} {\left(\frac{{\sum }_{k = 1}^{N} \left({X}_{kb}{P}_{k}\right) \left(1-{d}_{b}\right)}{{\sum }_{k = 1}^{N} \left({X}_{kb}{P}_{k}\right) \left(1-{d}_{b 0}\right)}\right)}^{{δ}_{b} ∗ {e}_{ib}}\end{matrix}$
   Where,
      *e_{ib}* is the promoted item i's cross price elasticity, which is change in sales of the item with respect to change in discount of bundle b.
   The cross-elasticity values are 0 when there is no interaction between items and/or bundles.
**Bundle level:** Revenue, Margin, and Demand for bundle b with constituent k having *X_{kb}* units, price *Pₖ* at discount *d_{b}* are given below:
   Revenue for bundle b, ${R}_{b} = {\sum }_{b = 1}^{L} {\sum }_{k = 1}^{N} \left[{X}_{kb}∗{P}_{k}\right] ∗ \left(1-{d}_{b}\right) ∗ {S}_{b}$
   Margin for bundle b, ${M}_{b} = {\sum }_{b = 1}^{L} {\sum }_{k = 1}^{N} \left[{X}_{kb}∗\left({P}_{k}-{C}_{k}\right)\right] ∗ \left(1-{d}_{b}\right) ∗ {S}_{b}$
   Demand for bundle b at discount *d_{b}*, ${S}_{b} = {S}_{b 0} ∗ {δ}_{b} ∗ {\left(\frac{{\sum }_{k = 1}^{N} \left({X}_{kb}∗{P}_{k}\right) \left(1-{d}_{b}\right)}{{\sum }_{k = 1}^{N} \left({X}_{kb}∗{P}_{k}\right) \left(1-{d}_{b 0}\right)}\right)}^{{e}_{bb}}$
   Therefore, the above equation reduces to ${S}_{b} = {S}_{b 0} ∗ {\left(\frac{\left(1-{d}_{b}\right)}{\left(1-{d}_{b 0}\right)}\right)}^{{e}_{bb}}$
   Where,
      - *d*_{*b*0}*, S*_{*b*0}: Initial discount and cum. Sales forecast for bundle b
      - *e_{bb}*: Price elasticity of bundle
   The demand equations include cross elasticity for inter-related items, promoted items-bundles interaction, and regular item - bundle interaction.

**Constraints:** The equations 1 through 6 above give the item level and bundle level minimum and maximum discount bounds. The Big-M method is used to define an auxiliary variable that takes revenue or margin of the SKU when it is selected and 0 otherwise.

### a. Item level:

Discount bounds for item i: Minimum and maximum discounts bounds ${δ}_{i} ∗ Min discount < = {d}_{i} < = {δ}_{i} ∗ Max discount$ Constraint on the revenue auxiliary variable : ${r}_{i} \leq {R}_{i}$ Constraint on the margin auxiliary variable : ${m}_{i} \leq {M}_{i}$ Where,
- *Mᵢ, M_{b}*: Margin of product i, Margin of bundle b
- *rᵢ*, *mᵢ*: Auxiliary variable for revenue and margin of item i
- *r_{b}, m_{b}*: Auxiliary variable for revenue and margin of bundle b

### b. Bundle level:

Bundle discount bounds: Minimum and maximum discount bounds ${δ}_{b} ∗ Min discount < = {d}_{B} < = {δ}_{b} ∗ Max discount$ Constraints on bundle revenue auxiliary variable : ${r}_{b} \leq {R}_{B}$ ${r}_{b} \leq {δ}_{b} M$ Constraints on bundle margin auxiliary variable: ${m}_{b} \leq {M}_{B}$ ${m}_{b} \leq {δ}_{b} M$ Where M is a very large number.

Total budget constraint for items and bundles: This constraint equation is the total budget constraint or the total margin loss constraint. This states that the total margin loss for the category should not exceed the total budget allocated for the promotion. The total budget constraint is given as follows ${\sum }_{i} {δ}_{i} ∗ {P}_{i} ∗ {d}_{i} ∗ {S}_{i} + {\sum }_{b} {δ}_{b} ∗ {\sum }_{k = 1}^{N} \left({X}_{kb}∗{P}_{k}\right) ∗ {d}_{b} ∗ {S}_{b} \leq Total Budget$ $Pi = Regular price$

**Business Constraints:** The business constraints consist of the following equations. The first equation specifies the maximum number of SKUs to be promoted. Mandatory list or delist of SKUs is the second equation and the third is that incompatible SKUs such that only one of the SKUs in the tuple should be listed.
a. Maximum number of SKUs/bundles to be promoted: Business constraints specifying maximum number of SKUs to be promoted is given by ${\sum }_{i} {δ}_{i} \leq MaxSKU$ ${\sum }_{b} {δ}_{b} \leq MaxBundles$
b. Mandatory list specified SKUs: Critical SKUs - SKUs in this list will have to undergo promotion mandatorily ${δ}_{i} = 1 ∀ i in listSKUs$
c. Incompatible SKUs: Either/Or SKUs - only one among the tuple can undergo promotion at a time ${\sum }_{i} {δ}_{i} \leq 1 ∀ i in incompatSKUs$
d. Maximum No. of bundles (maxConsBundles) a SKU i can belong to - ${\sum }_{i ∈ b} {δ}_{b} \leq maxConsBundles$

### Bundle Conflicts rules:

a. At least one bundle with a specific SKU i must be promoted ${\sum }_{i ∈ b} {δ}_{b} \geq 1$
b. Disable item i promotion if item i present in any bundle ${\sum }_{i ∈ b} {δ}_{i} = 0$

**Output:** The final output is the best set (optimal set) of promotional items, bundles and their optimal discounts that maximizes the objective within the given constraints.

```
 Algorithm 3: Promotion optimization using MINLP Framework
 Pseudocode
 Input: Targets, Total budget, Weights for objective, Penalty, bigM, Business rules,
 Solver options
 Variables: Optimal discount (d), Binary selection variable (δ)
 Calculate sales, revenue, and margin for items and bundle level using intermediate
 variables for optimal discount
 Define objective (Refer Equation 1) with auxiliary variables (r and m) for total revenue
 and total margin along with penalties for not reaching the targets
 for each SKU/Bundle i: do
```

$r \left[i\right] < = R \left[i\right] and r \left[i\right] < = bigM * δ \left[i\right]$ $m \left[i\right] < = M \left[i\right] and m \left[i\right] < = bigM * δ \left[i\right]$

```
 end for
 Sum of margin loss due to promotion ≤ Total budget
 Apply Business rules and resolve bundle conflicts
 Return total revenue r, total margin m, discount d, total budget used, selected list of
 SKUs and bundles.
```

### EXPERIMENTAL RESULTS:

A comprehensive MINLP module, interchangeably referred to as MINLP model is developed for promotion planning that incorporates own-price and cross-price elasticity using advanced optimization GEKKO's APOPT^{™} solver . The method 200 was applied to a real-world grocery category for the retailers' promotion planning problem. The output of method 200 is discussed for 10 item bundles and 5 items belonging to the grocery category. Post the pre-processing, 8 item bundles and 3 item were then sent to the MINLP optimization. The approach scales sub-linearly with the number of SKUs, making it feasible for real-time implementation in retail settings. Wall time or wall-clock time measures the total time to execute a program on a computer. For example, for 10 SKUs, the wall time was 484 ms. When extrapolated to 50 SKUs, the wall time came to 716 ms.

**Results of the MINLP optimization:** The MINLP optimization results are summarized below:
Selected Items: Out of 12 items and bundles, one was de-listed due to low potential revenue. Optimal Discounts: Discounts ranged from 5% to 35%, maximizing revenue and margin while adhering to constraints. KPIs at item level, bundle level and category level - Table 2A gives details of the list of items and bundles selected, their optimal discount values and KPI values. Items with Product_ids ( to be understood as item ids) beginning with 'P' are products (items) and the remaining are bundles ( item bundles or product bundles). KPIs: Revenue Achieved: $37,483.27 (Target 30000), Margin Achieved: $31,527.75 (Target 20000), Budget used: 13499.31 (Budget 15000).

**Table 2A**

| product_ id | base_p rice | select ed | new_disc ount | budget_ used | new_s ales | new_rev enue | new_ma rgin |
|---|---|---|---|---|---|---|---|
| B_E_22 _15 | 2 | 1 | 0.2 | 989.79 | 2474.4 7 | 3959.15 | 3325.69 |
| B_E_33 _30 | 3 | 1 | 0.35 | 8234.54 | 7842.4 2 | 15292.72 | 12845.8 9 |
| B_M_42 _30 | 12 | 1 | 0.35 | 31.25 | 7.44 | 58.04 | 49.33 |
| E_B_34 _20 | 10.5 | 1 | 0.25 | 390.2 | 148.65 | 1170.6 | 998.91 |
| E_M_43 _25 | 14 | 1 | 0.3 | 49.97 | 11.9 | 116.6 | 99.11 |
| M_B_22 _25 | 6 | 1 | 0.3 | 737.63 | 409.8 | 1721.14 | 1468.71 |
| M_B_31 _20 | 6 | 1 | 0.25 | 16.38 | 10.92 | 49.15 | 41.94 |
| M_E_21 _10 | 1.5 | 1 | 0.15 | 2335.86 | 10381. 59 | 13236.52 | 11118.6 8 |
| P001 | 2 | 1 | 0.05 | 2.48 | 24.82 | 47.15 | 39.71 |
| P002 | 1.5 | 1 | 0.05 | 1.81 | 24.18 | 34.46 | 29.14 |
| P003 | 0.5 | 1 | 0.05 | 7.4 | 296.03 | 140.62 | 116.93 |

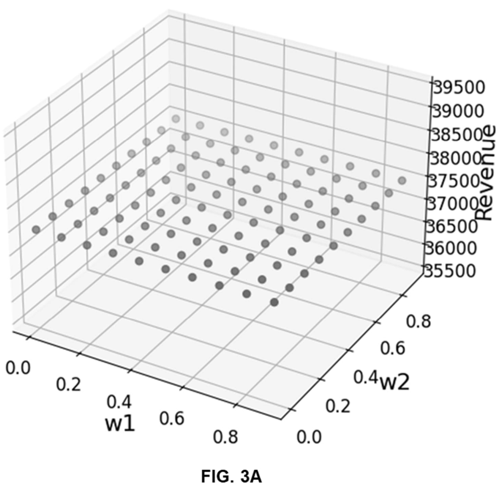

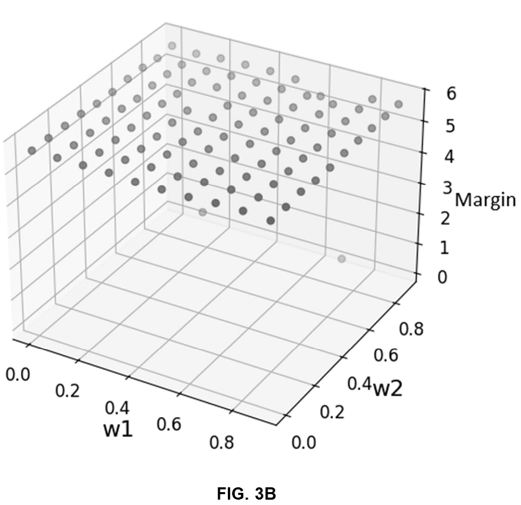

Revenue vs. Margin Trade-Off: A framework is designed that allows retailers to prioritize revenue or margin by adjusting weights in the objective function. For instance: Low weight on revenue (w₁) results in higher margin. High weight on revenue increases revenue at the cost of margin. The total revenue and total margin achieved for various weights w₁ and w₂ for a given budget are depicted in FIG. 3A and 3B. In FIG, 3A, plot 1 corresponds to w₁ vs. w₂ vs. total revenue and in FIG. 3B plot 2 corresponds to w₁ vs. w₂ vs. total margin. In plot 1, when w₁ is low and w₂ is high, total revenue is high. In plot 2, when w₁ is high and w₂ is low, total margin is high.

Validation To evaluate the effectiveness and robustness of the MINLP approach disclosed herein, a series of validation experiments was performed.

Robustness and Sensitivity Analysis: The MINLP model ran from multiple random starting points and observed that the consistently converged to similar solutions to ensure the robustness of the solution disclosed herein. Also, a sensitivity analysis was performed that revealed that small perturbations in discounts (±0.01 for 100 iterations) have minimal impact on key performance indicators (KPIs), confirming the solution's stability. Key results: Original Objective Value: $98.84, Average Perturbed Objective Value: $98.83, Maximum Perturbed Objective Value: $98.89, Budget: $15,000, Perturbed Budget (Budget_SA): $24,660.93. The optimal solution adheres to budget constraints, with perturbations yielding slightly lower average objective values than the original. While steeper discounts can achieve higher objective values, they violate budget constraints. This confirms that the two-step solution using heuristics and MINLP is optimal under the given budgetary limits.

**Comparison with existing approaches:** The MINLP approach significantly outperformed both the greedy heuristic and nonlinear optimization (using SLSQP solver) methods which demonstrated its superiority over conventional approaches and delivering high-quality solutions for promotion planning. As shown in Table 2B, MINLP achieves a 1.69% higher margin than the greedy heuristic and a 0.83% higher margin than SLSQP. While revenue is marginally lower, the substantial reduction in budget usage makes MINLP a more cost-effective solution. Retailers would like to compare the average promotion discounts from the past and the discounts suggested, to determine the effectiveness of the promotion. For this data, compared to average past discounts, there was 9.2% increase in sales units, 2.4% increase in revenue, and 6.3% increase in margin.

**Table 2B**

| Method | New Margin Tgt:20k | New Revenue Tgt:30k | Budget Used |
|---|---|---|---|
| Greedy | 29632 | 37165 | 13394 |
| SLSQP | 29886.88 | 37483.27 | 13499.31 |
| MINLP | 30134.03 | 35826.15 | 12797.32 |

**Table 3**

| Effect | New Revenue Tgt:30k | New Margin Tgt:20k | Budget Avl: 15k |
|---|---|---|---|
| W\O CE | 33101.67 | 27107.14 | 4591.30 |
| With CE | 35826.15 | 30134.03 | 12797.32 |

What-if Scenarios: What-if scenarios reduce risks and support data-driven decision-making.

Accounting for Cross Elasticity Effects: The analysis revealed that incorporating cross-elasticity into the optimization model improves revenue by 4.63% while utilizing lesser amount of budget (Table 3). This inclusion also resulted in higher discounted sales for most SKUs, demonstrating the model's ability to strategically adjust discounts on related products to boost sales.

Changes in Budget and Target: It was observed that changes in budget affects the items selected; delisting many SKUs if budget is decreased and also reduces margin and revenue achieved (Table 4). Increase in targets involves more budget and gives discounts to the de-listed item having less target values and produces higher revenue and margin (Table 5). Both budget and target changes significantly influence the promotion plan.

**Table 4**

| Total Budget | Budget used | New Margin | New Revenue |
|---|---|---|---|
| 15000 | 13499.31 | 30134.03 | 35826.15 |
| 5000 | 4697.22 | 29582.14 | 35165.13 |

**Table 5**

| Revenue Target | Margin Target | Budget used | New Margin | New Revenue |
|---|---|---|---|---|
| 30000 | 20000 | 13499.31 | 30134.03 | 35826.15 |
| 40000 | 30000 | 13507.13 | 31527.75 | 37483.27 |

Promotion effectiveness and changes in min-max price discount bounds: Introducing promotional discounts improves revenue by 18.12% and margin by 19.42% (Table 6A and 6B). In Table 6A and 6B, by introducing a +/- 5 % perturbation to the minimum and maximum price discount, it can be inferred that the KPIs are more sensitive to adjustments in the positive direction for min-max discount adjustments.

Accounting for Hoarding effects: In retail, hoarding effects occur when customers purchase in large quantities during promotions or anticipate price increases. In the EDA, it was found that the prices of the previous 3 weeks had a significant correlation with the sales of the current week. It wase observed a 2% improvement in the demand forecasting accuracy after the inclusion of prices corresponding to the previous few weeks.

Business rules: For the method 200, the maximum number of products/items selected for promotion is set as 6. Also included are other rules such as: SKUs 6, 8, and 9 are to be delisted, while SKU 10 is to be mandatorily included. The optimization results after inclusion of rules are as follows: Revenue Target: 30,000; Achieved: 37,254.49; Margin Target: 20,000; Achieved: 29,713.38; Budget Used: 13,357.80 (within 15,000); Discounts: [0.2, 0.35, 0.0, 0.25, 0.0, 0.3, 0.0, 0.15, 0.0, 0.0, 0.05]; Selection: SKUs [0, 1, 3, 5, 7, 10].

Forming New Bundles: Retailers often use product/item bundles to boost sales, targeting customer preferences identified through historical sales data. New bundles were formed using Market Basket Analysis ( also referred to as Affinity analysis) on POS data to identify the top product combinations. One example of a new bundle consisted of milk bundled in pairs with one or more units of bread or eggs. The discounts were set as 2% higher than the sum of historical discounts for the constituent products/items to make bundles more appealing. After the inclusion of new bundles, one of the existing bundles got de-listed and four out of five of the new bundles were listed. By inclusion of the new bundles, it was observed that there was a revenue increase of 27% and a margin increase of 16%. Higher revenue targets were achieved, and low performing bundles were excluded, demonstrating the efficiency of this approach (see Table 7).

**Table 6A**

| Promotion | NewMargin | NewRevenue |
|---|---|---|
| Without promo | 25512.32 | 29999.99 |
| With promo | 30134.03 | 35826.15 |

**Table 6B**

| Min-max | New Margin | New Revenue |
|---|---|---|
| | | |
| Original | 30134.03 | 35826.15 |
| Perturbed -5% | 29878.60 | 35526.26 |
| Perturbed +5% | 32907.40 | 39117.55 |

**Table 7**

| Effect | New Revenue (Tgt=40k) | New Margin (Tgt=30k) | Budget (Avl=20k) | Discounts |
|---|---|---|---|---|
| Existing bundles | 37483.27 | 31527.75 | 12797.32 | [0.2, 0.35, 0.35, 0.25, 0.3, 0.3, 0.25, 0.15, 0.05, 0.05, 0.05] |
| New Bundles | 47642.05 | 36644.96 | 16244.65 | [0.2, 0.35, 0.35, 0.25, 0.3, 0.3, 0.25, 0.15, 0.0, 0.05, 0.15,0.2,0.3,0.3,0.0] |

Thus, the method and system disclosed herein provides seamless integration into existing pricing and customer relationship management (CRM) platforms. It can be deployed as a cloud-based API, allowing retailers to automate promotion planning across multiple locations. Further, it supports multi-channel retailing (Brick & Mortar + E-commerce) by optimizing promotions across different platforms. The scalable and AI-powered promotion optimization framework that outperforms traditional rule-based and heuristic-driven approaches. By integrating AI, generative models, MINLP optimization, and causal inference techniques, it ensures higher revenue, increased margin retention, and more effective promotions.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application3-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for promotion planning, the method comprising:
creating, via one or more hardware processors, a plurality of bundles within a plurality of items for a promotion plan at a store or store group level based on one or more inputs derived from an affinity analysis for identifying co-purchased items, a complement addition for augmenting existing bundles, clustering items based on product attributes, and propensity scores, wherein items and bundles are created for each customer segment among a plurality of preidentified customer segments in the store or the store group;
selecting, via the one or more hardware processors executing a greedy selection technique and a local search heuristic, a plurality of optimization candidates comprising a set of items from among the plurality of items and a set of bundles from among the plurality of bundles, for a promotion optimization problem, wherein the greedy selection technique and the local search heuristics is applied iteratively on the plurality of items and the plurality of bundles arranged in descending order of a greedy score metric and filtered at an initial level based on business rules and bundle conflicts, a total budget of the promotion planning, and the propensity scores to obtain the plurality of optimization candidates; and
identifying a promotion list comprising optimal items and bundles and associated optimal discounts from among the plurality of optimization candidates using a Mixed Integer Non-Linear Programming (MINLP) that maximizes a non-linear objective function while satisfying a plurality of constraints, the plurality of constraints comprising a total margin loss constraint, preset minimum and maximum price discount bounds for the items and the bundles, the business rules, the bundle conflicts, cross-price elasticity within a demand function of the item during the MINLP optimization to capture effect of promotions on one item or bundle affecting a demand for other items or bundles, wherein the MINLP maximizes the weighted combination of a total margin and a total revenue while allowing to exceed preset revenue and margin targets and applying constraints for a promotion period.

2. The method as claimed in claim 1, wherein a conditional GAN (CTGAN) model generates synthetic sales data for created plurality of bundles to address cold-start issues due to data limitations resulting from unavailability actual sales data for created bundles .

3. The method as claimed in claim 1, wherein
the total margin loss for a category defining hierarchy of the store is less than or equal to the total budget for the promotion planning, wherein the category refers to the store hierarchy,
the total margin loss for the category is less than or equal to total budget for the category,
the total margin loss for the category is the total loss of the margin on the items and bundles sold in the category, and
the total margin loss for the category is equal to summation of [(Regular Price - Promotion price) * Demand at Promotional price] for items and bundles in the promotion list.

4. The method as claimed in claim 1, wherein the business rules for promotion planning define:
a maximum number of SKUs to be promoted, incompatible SKUs, mandatory list/delist SKUs,
minimum and maximum price discount bounds for items,
minimum and maximum price discount bounds for bundles,
maximum number of bundles a SKU can belong to, and
a critical SKU list specifying SKUs that mandatorily require promotion planning.
incompatible SKUs, wherein only one among the list can undergo promotion at a time,

5. The method as claimed in claim 1,
wherein a plurality of parameters computed for the MINLP optimization comprises bundle and item level regular price elasticity, demand forecast at a specific price, substitutes and complements for items and bundles, cross elasticity values for inter-related items, bundles, regular-promotion item interaction and regular item - bundle interaction,
wherein the substitutes and complements for items and bundles are related items and determined from the historical data using covariance based approach or affinity analysis,
wherein the cross price elasticity is obtained using a log of prices of the related items, and
wherein the bundle conflicts comprise logical conflicts and user defined conflicts.

6. The method as claimed in claim 1, wherein the greedy score metric is weighted sum of normalized performance score and the propensity score, performance score is a weighted sum of revenue and margin associated with optimal performance and wherein the propensity score enables combining one or more items with high purchase likelihood within a plurality of customer segments during bundle creation.

7. The method as claimed in claim 1, wherein the plurality of optimization candidates also comprise existing bundles derived from historical data.

8. A system (100) for promotion planning, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
create a plurality of bundles within a plurality of items for promotion plan at a store group level based on inputs derived from affinity analysis for identifying co-purchased items, a complement addition for augmenting existing bundles, clustering items based on product attributes , and propensity scores, wherein items and bundles are created for each customer segment among a plurality of preidentified customer segments in the store or the store group;
select by executing a greedy selection technique and a local search heuristic a plurality of optimization candidates comprising a set of items from among the plurality of items and a set of bundles from among the plurality of bundles, and for a promotion optimization problem, wherein the greedy selection technique and the local search heuristics is applied iteratively on the plurality of items and the plurality of bundles arranged in descending order of a greedy score metric and filtered at an initial level based on business rules and bundle conflicts, a total budget of the promotion planning, and the propensity scores to obtain the plurality of optimization candidates; and
identify a promotion list comprising optimal items and bundles and associated optimal discounts from among the plurality of optimization candidates using a Mixed Integer Non-Linear Programming (MINLP) that maximizes anon-linear objective function while satisfying a plurality of constraints, the plurality of constraints comprising a total margin loss constraint, preset minimum and maximum price discount bounds for the items and the bundles, the business rules, the bundle conflicts, cross-price elasticity within a demand function of the item during the MINLP optimization to capture effect of promotions on one item or bundle affecting a demand for other items or bundles, wherein the MINLP maximizes the weighted combination of a total margin and a total revenue while allowing to exceed preset revenue and margin targets and applying constraints for a promotion period.

9. The system as claimed in claim 8 wherein a conditional GAN (CTGAN) model generates synthetic sales data for created plurality of bundles to address cold-start issues due to data limitations resulting from unavailability actual sales data for created bundles .

10. The system as claimed in claim 8, wherein,
the total margin loss for a category defining hierarchy of the store is less than or equal to the total budget for the promotion planning, wherein the category refers to the store hierarchy,
the total margin loss for the category is less than or equal to total budget for the category,
the total margin loss for the category is the total loss of the margin on the items and bundles sold in the category, and
the total margin loss for the category is equal to summation of [(Regular Price - Promotion price) * Demand at Promotional price] for items and bundles in the promotion list.

11. The system as claimed in claim 8, wherein the business rules for promotion planning define:
a maximum number of SKUs to be promoted, incompatible SKUs, mandatory list/delist SKUs,
minimum and maximum price discount bounds for items,
minimum and maximum price discount bounds for bundles,
maximum number of bundles a SKU can belong to, and
a critical SKU list specifying SKUs that mandatorily require promotion planning.
incompatible SKUs, wherein only one among the list can undergo promotion at a time,

12. The system as claimed in claim 8,
wherein a plurality of parameters computed for the MINLP optimization comprises bundle and item level regular price elasticity, demand forecast at a specific price, substitutes and complements for items and bundles, cross elasticity values for inter-related items, bundles, regular-promotion item interaction and regular item - bundle interaction,
wherein the substitutes and complements for items and bundles are related items and determined from the historical data using covariance based approach or affinity analysis,
wherein the cross price elasticity is obtained using a log of prices of the related items, and
wherein the bundle conflicts comprise logical conflicts and user defined conflicts.

13. The system as claimed in claim 8, wherein the greedy score metric is weighted sum of normalized performance score and the propensity score, performance score is a weighted sum of revenue and margin associated with optimal performance and wherein the propensity score enables combining one or more items with high purchase likelihood within a plurality of customer segments during bundle creation.

14. The system as claimed in claim 8, wherein the plurality of optimization candidates also comprise existing bundles derived from historical data.

15. One or more non-transitory machine-readable information storage mediums comprising one or more instructions which when executed by one or more hardware processors cause:
creating a plurality of bundles within a plurality of items for a promotion plan at a store or store group level based on one or more inputs derived from an affinity analysis for identifying co-purchased items, a complement addition for augmenting existing bundles, clustering items based on product attributes, and propensity scores, wherein items and bundles are created for each customer segment among a plurality of preidentified customer segments in the store or the store group;
selecting, by executing a greedy selection technique and a local search heuristic, a plurality of optimization candidates comprising a set of items from among the plurality of items and a set of bundles from among the plurality of bundles, for a promotion optimization problem, wherein the greedy selection technique and the local search heuristics is applied iteratively on the plurality of items and the plurality of bundles arranged in descending order of a greedy score metric and filtered at an initial level based on business rules and bundle conflicts, a total budget of the promotion planning, and the propensity scores to obtain the plurality of optimization candidates; and
identifying a promotion list comprising optimal items and bundles and associated optimal discounts from among the plurality of optimization candidates using a Mixed Integer Non-Linear Programming (MINLP) that maximizes a non-linear objective function while satisfying a plurality of constraints, the plurality of constraints comprising a total margin loss constraint, preset minimum and maximum price discount bounds for the items and the bundles, the business rules, the bundle conflicts, cross-price elasticity within a demand function of the item during the MINLP optimization to capture effect of promotions on one item or bundle affecting a demand for other items or bundles, wherein the MINLP maximizes the weighted combination of a total margin and a total revenue while allowing to exceed preset revenue and margin targets and applying constraints for a promotion period.
